# EUROPÄISCHE PATENTSCHRIFT

(11) **EP 0 260 586 B1**
(45) Veröffentlichungstag und Bekanntmachung des Hinweises auf die Patenterteilung: **24.02.1993**
(21) Anmeldenummer: 87113154.6
(22) Anmeldetag: 09.09.1987
(51) Int. Cl.: B64C 3/50, B64C 3/58

(54) **Tragflügel**
Wing
Aile

(30) Priorität: 15.09.1986 DE 3631320
(43) Veröffentlichungstag der Anmeldung: 23.03.1988
(73) Patentinhaber: Riedelsheimer, Hans-Joachim, D-63864 Glattbach (DE)
(72) Erfinder: Riedelsheimer, Hans-Joachim, D-63864 Glattbach (DE)
(74) Vertreter: Pöhner, Wilfried Anton, Dr.

(56) Entgegenhaltungen:
- FR-A- 923 330
- GB-A- 486 568
- US-A- 3 831 885
- "Design of the Aeroplane", D. Stinton, London 1983, Seiten85,91 und 92

## Beschreibung

Die Erfindung bezieht sich auf einen Tragflügel für Flugzeuge mit einer Klappe zur Verringerung der Hinterkantablösung, die an der Oberseite des Tragflügels an dessen hinterem Teil schwenkbar befestigt ist, die im anliegenden Zustand, etwa im Bereich der Hinterkante endet, beim Öffnen von der Hinterkante her öffnet, deren Schwenkachse etwa quer zur Strömungsrichtung verläuft und deren Öffnungswinkel maximal 90° beträgt.

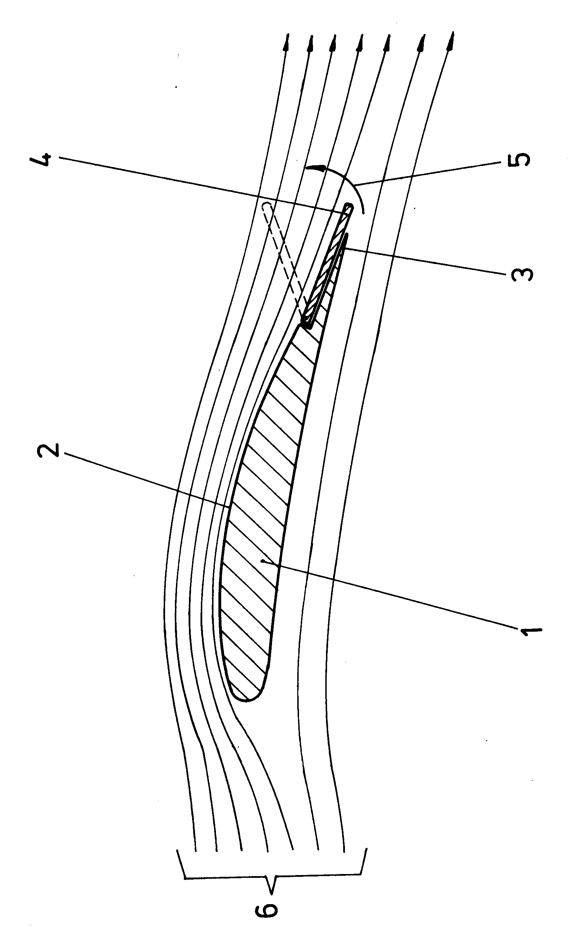

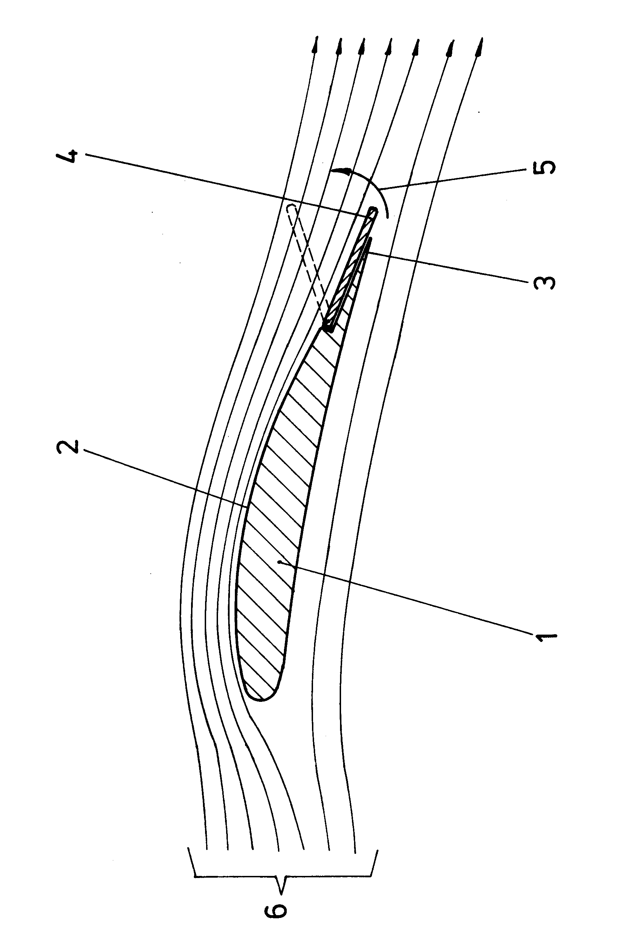

Allgemein ist bekannt, daß bei Flugzeugen der Auftrieb durch die Vorwärtsbewegung des Tragflügels in der umgebenden Luft zustande kommt. Der umströmte Tragflügel zerteilt und verdrängt die umgebende Luft, die sich hinter ihm wieder zusammenschließt. Durch das Profil des Tragflügels werden die strömenden Luftmassen verzögert und beschleunigt, wodurch sich an der Oberseite ein Unter- und an der Unterseite ein Überdruck ergibt, aus dessen Differenz der Auftrieb resultiert. Dieser Auftrieb und demzufolge auch der Auftriebsbeiwert, der eine Verhältnisgröße des Auftriebes darstellt, nehmen mit größer werdendem Anstellwinkel zu, welcher definiert ist als der Winkel zwischen der auftreffenden Luftströmung und dem Tragflügel, und wird zusätzlich von der Form des Profiles bestimmt. Eine Vergrößerung des Anstellwinkels über einen bestimmten Wert, der den maximalen Auftrieb bzw. Auftriebsbeiwert darstellt, hinaus, bewirkt eine Ablösung der Strömung und ein Zusammenbrechen des Auftriebes. Neben dem maximal erreichbaren Anstellwinkel bzw. Auftriebsbeiwert ist für die Qualität eines Tragflügels aus Sicherheitsgründen auch entscheidend, wie rasch, bestimmt durch die Form des Profiles, das Ablösen der Strömung einsetzt. Unerwünscht sind sog. "giftige Profile", bei denen die Strömung schlagartig abreißt, so daß der Pilot überrascht werden muß.
Aus der die Gattung bildenden FR-A-923 330 ist die Anordnung einer verschwenkbaren Klappe auf der Oberseite des Tragflügels bekannt, bei der die Klappe im anliegenden Zustand etwa im Bereich der Hinterkante endet. Die Öffnung erfolgt von der Hinterseite her und dient der Widerstandserzeugung und zur Einleitung der Kurvenfahrt. Im Falle der US-PS 3,831,885 liegt eine spezielle Gestaltung der Oberseite des Tragflügels vor, in dessen Mittelbereich ein Wirbel entsteht, der aerodynamisch genutzt wird und Anlaß zum Ansaugen der Ausgleichsströmung über die Hinterkante von der Tragflügelunterseite her gibt. Es liegen somit spezielle, zwei Wirbel aufweisende Strömungsverhältnisse vor, die auch die Veröffentlichung Stinton "The design of the aeroplane" London 1983, s. Fig. 3d beschreibt.

Hiervon ausgehend hat sich die Erfindung die Verbesserung von Tragflügeln an Flugzeugen dahingehend zur Aufgabe gemacht, daß einerseits ein größerer Auftrieb erzeugt wird und andererseits mehr Sicherheit gegen Abreißen und Ablösen der Strömung gegeben ist.

Gelöst wird diese Aufgabe erfindungsgemäß dadurch, daß sich die Klappe gegen eine Kraft, z.B. eine Feder bewegt, die so eingestellt ist, daß sich mit oder kurz vor Erreichen des kritischen maximalen Anstellwinkels des Tragflügels ohne Klappe die Klappe öffnet.

Der Erfindung liegen folgende Überlegungen zugrunde:
Wie bereits beschrieben, entstehen beim Umströmen des Tragflügels an der Oberseite ein Unter- und an der Unterseite ein Überdruck, aus denen der Auftrieb resultiert. Dieser Druckgradient erzeugt eine Strömung in Richtung vom höheren zum niedrigeren Druck. Im konkreten Fall des Tragflügels entsteht hierdurch an der Vorderkante als auch, was ganz entscheidend ist, an der Hinterkante des Tragflügels eine nach oben gerichtete Strömung, deren Stärke bestimmt wird durch die Druckdifferenz, folglich durch die unterschiedlichen an Ober- und Unterseite des Tragflügels herrschenden Strömungsgeschwindigkeiten und damit den Anstellwinkel. Bei dessen Vergrößerung wird der Weg der umströmenden Luft und demzufolge deren Geschwindigkeit erhöht, die Druckdifferenz und der Auftrieb gesteigert und letztlich auch die einzig hier interessierende, nach oben gerichtete Umströmung der Hinterkante ebenfalls verstärkt. Abschätzungen haben gezeigt, daß diese Geschwindigkeit etwa quadratisch mit der Umströmgeschwindigkeit des Tragflügelprofils zusammenhängt und mit Erreichen eines bestimmten Anstellwinkels so groß wird, daß sich aufgrund dieses

Einflusses ausgehend von der Hinterkante die Strömung von der Tragflügeloberseite ablöst und abreißt. In diesem Augenblick überschreitet man den maximalen Anstellwinkel bzw. den maximalen Auftriebsbeiwert. Zur Optimierung des Auftriebes ist man stets bestrebt, die Tragflügel so zu gestalten, daß der Anstellwinkel möglichst groß gewählt werden kann.
Die vorgeschlagene Anordnung, die auf eine der im folgenden näher erläuterten Arten und Weisen betätigt wird und zwar vor oder mit Erreichen des kritischen Anstellwinkels (ohne erfindungsgemäße Klappe), unterbindet oder verringert die von der Hinterkante ausgehende und an der Oberseite des Tragflügels nach vorne zu auf ein Ablösen gerichtete Strömung oder verschiebt sie zu einem größeren Anstellwinkel hin.
Die Klappe soll für die an der Hinterkante von unten nach oben gerichtete Strömung einen Widerstand entgegensetzen.
Zur Klarstellung oder zur Abgrenzung ist festzuhalten, daß es sich nicht um sog. Spoiler handelt, die mehr in der Flügelmitte angeordnet sind und zur Bremsung, also Autrriebsverringerung, eingesetzt werden.
Die Klappe ist entgegen einer Gegenkraft öffenbar, die dann so einzustellen ist, daß sich mit oder kurz vor Erreichen des kritischen und damit maximal möglichen Anstellwinkels die Klappe aufrichtet. Diese Gegenkraft kann beispielsweise über eine Feder realisiert sein. Wie bereits erläutert, erhöht sich die um die Hinterkante von unten nach oben gerichtete Strömung mit zunehmendem Anstellwinkel.

Realisierbar ist dies durch entsprechende Formung der Klappe, z. B. so, daß sie über die Hinterkante übersteht und/oder daß auf der Oberfläche derselben Profile angebracht sind, die der Luftströmung tangential zur Oberfläche des Profiles einen geringen, der Strömung um die Hinterkante jedoch einen wesentlich größeren Widerstand entgegensetzen und demzufolge ein öffnendes Moment auf die Klappe ausüben. Die Oberflächenformung könnte über schräg gestellte Lamellen o.ä. verwirklichbar sein. Entscheidend ist, daß die Einstellung der Gegenkraft so erfolgt, daß bei maximalem Anstellwinkel die Klappe in die Öffnungsstelle fährt, wobei vorzugsweise der Öffnungswinkel der Klappe maximal dem kritischen Anstellwinkel (ohne Klappe) ist. Unter kritischem maximalen Anstellwinkel ist die Position des Tragflügels zu verstehen, indem bei weiterem Erhöhen des Anstellwinkels der Auftrieb geringer wird. Der wesentliche Vorteil ist darin zu sehen, daß mit Erreichen der kritischen Flugsituation selbsttätig insbesondere auch bei panikartigen Reaktionen des Piloten die Klappen ausgefahren und der Flugzustand stabilisiert wird. Für die Sicherheit ein wesentlicher Fortschritt.

Durch die Erfindung lassen sich eine Vielzahl weiterer Vorteile erreichen:
Wie bereits erläutert, wird die vorbeschriebene, die Hinterkante nach oben zu umströmende Luft an ihrer Ausbreitung über die Oberfläche des Profiles gehindert und hierdurch der maximal mögliche Anstellwinkel vergrößert, d.h. daß die Strömung erst zu einem späteren Zeitpunkt abreißt. Parallel zu einer Erhöhung des maximal möglichen Anstellwinkels erreicht man eine Vergrößerung des maximalen Auftriebsbeiwertes.
Wie die Erfahrung zeigt, besitzen die ein abruptes und sprungartiges Abreißverhalten zeigenden sog. "giftigen Profile" regelmäßig einen ausgesprochen niedrigen Widerstand. Die Erfindung erlaubt damit erstmalig und läßt es als möglich zu, daß derartige giftige Profile eingesetzt werden, wenn im Zeitpunkt des Abreißens der Strömung oder kurz davor die erfindungsgemäßen Klappen ausgefahren werden, mit der Folge, daß das Abreißverhalten verhindert oder doch zumindestens wesentlich geglättet wird. Das Ergebnis ist dann ein außerordentlich widerstandsarmes Profil jedoch mit geglättetem und weichem Abreißverhalten.

Ein erheblicher Zuwachs an Sicherheit ergibt sich dadurch, daß das Flugzeug beim Trudeln, d.h. bei spiralförmigem Sturz - hierbei vollführt das Flugzeug eine kreisförmige Bewegung um eine etwa senkrecht zu der durch die Tragflächen definierten Ebene verlaufende Achse - wesentlich rascher abgefangen werden kann. In diesem Flugzustand wird ein Teil der Tragflächen von vorne und durch die Spiralbewegung auch teilweise von der Rückseite her angeströmt. Wenn nun bei letzterem Flügel teilweise oder vollständig die Klappen ausgefahren werden erhält man einen bei Anströmung aus gerade dieser Richtung einen wesentlich höheren Strömungswiderstand, der zuläßt, daß die Flügel nur von vorne angeströmt werden. Eine entsprechende frühzeitige Stabilisierung und ein Übergang in die Normalflugbewegung ist die Folge. Vor allen Dingen für solche Flugsituationen ist das selbsttätige Ausfahren der Klappen von besonderem Vorteil.
Die Tatsache, daß der einmal eingeleitete Trudelvorgang sofort unterbunden bzw. das bereits ins Trudeln geratene Flugzeug wesentlich rascher abfangbar wird, erlaubt den Schwerpunkt näher an den Druckpunkt der Tragflächen zu setzen. Dies hat zwar zur Folge, daß die Fluglage insgesamt instabiler wird, d.h. daß das Flugzeug durch Krafteinwirkungen von außen, wie sie beispielsweise durch Windböen hervorgerufen werden können, eher dynamische Instabilitäten zeigt, was aufgrund der erfindungsgemäßen Vorrichtung jedoch vertretbar ist, hat jedoch den ganz erheblichen Vorzug, daß das einen Abtrieb erzeugende Leitwerk kleiner dimensioniert und der hierdurch verursachte Energieverbrauch reduziert werden kann. Eine Erhöhung der Gesamtleistung des Flugzeuges bzw. eine Einsparung an Kraftstoff ist die Folge.
Ein weiterer Vorzug besteht darin, daß die ausgefahrene erfindungsgemäße Klappe einen Gegenmoment erzeugt, daß das jedem Flügel innewohnende, auf ein Aufrichten hinzielendes Nickmoment verringert oder gar zu Null macht. Dieses Nickmoment muß normalerweise durch die Leitwerke oder andere konstruktive Maßnahmen berücksichtigt und kompensiert werden.

Von Vorteil ist, die Klappe so anzubringen, daß sie in geschlossenem Zustand mit der Oberseite des Tragflügels fluchtet. Das Profil bleibt dann ungeändert, so daß im Normalflug kein zusätzlicher Widerstand und auch anderes Flugverhalten auftreten kann.

In einer vorteilhaften Weiterbildung ist die Klappe so bemessen, daß sie sogar etwas über die Hinterkante des Tragflügels übersteht. Ein Vorteil ergibt sich bei dem im folgenden noch näher zu beschreibenden selbsttätigen Ausfahren, da dann die die Hinterkante umströmende Luft teilweise die Klappe anströmt, eine Kraftwirkung in dem Sinne auswirkt, daß sie sich öffnet. Der über die Hinterkante hinausstehende Teil dient der Erzeugung eines öffnenden Momentes.

Grundsätzlich steht das Auslösen der Schwenkbewegung der Klappe im Rahmen der Erfindung jedoch frei. So kann sie beispielsweise per Hand erfolgen oder durch eine entsprechende beispielsweise durch den Bordcomputer ausgelöste Steuer- und Stelleinrichtung.

Neben den soeben beschriebenen Ausführungsformen mit starrer Klappe, die sich als ganzes um eine Hinterkantenfernen Achse verschwenken, wird von der Erfindung als Alternative vorgeschlagen, die Klappe durch elastische Deformation über ihre gesamte Breite zu Öffnen. Eine Schwenkachse ist dann nicht mehr definierbar. In Funktion setzt sich dann die Klappe von der Hinterkante ausgehend spanförmig vom Tragflügel ab. Bereits mit Umströmen der Hinterkante, d.h. noch vor Erreichen des maximalen Anstellwinkels beginnt sich die Klappe abzulösen und aufzustellen. Von Vorteil ist hierbei die Erzeugung eines knickfreien gerundeten Übergangs.

Als vorteilhaft wird ein Aufbau der erfindungsgemäßen Klappe aus glasfaserverstärktem Kunststoff (GFK) oder anderem faserverstärktem Kunststoff angesehen.

Die Anbringung mehrerer, unabhängig voneinander betätigbarer Klappen bedeutet, daß sich nur in den Bereichen mit ablösender Strömung - bei Kurvenflug oder sich verjüngender Profiltiefe erfolgt ein Ablösen der Strömung abschnittsweise - die Klappen aufstellen.

Schließlich besteht noch die Möglichkeit, die Klappen in mehreren parallel zur Hinterkante verlaufenden und gegeneinander in Flugrichtung versetzten Reihen anzuordnen. Es ergibt sich dann eine Mehrstufigkeit, durch die eine Stabilisierung auch dann noch möglich wird, wenn die eine unmittelbar an der Hinterkante und im Öffnungszustand befindliche Klappe zwar geöffnet ist, jedoch nicht mehr ausreicht, die die Hinterkante umströmende Luft von der Oberfläche des Tragflügels fernzuhalten sondern diese die Klappe überwindet. Bei Mehrstufigkeit kann dann die nachfolgende Klappe möglicherweise dieses Ziel erreichen. Der Anstellwinkel, bei dem die Strömung abreißt, läßt sich auf diese Weise zu größeren Werten verschieben. Bei Überlappung wird die Öffnungsbewegung der Nachfolgenden durch die Vorangehende eingeleitet und unterstützt.

Weiter empfiehlt sich, den Rand der Klappen im Bereich der Hinterkante rund oder spitz oder sägezahn- oder wellenartig zu formen, da dann die vom Rand ausgehenden Wirbel gegeneinander versetzt sind und sich bei entsprechender Dimensionierung durch Interferenz auslöschen oder zumindest abschwächen können. Dies gilt in besonderer Weise bei über die Hinterkante überstehende Klappen. Geringere Wirbelausbildung bedeutet Widerstandsminderung und Vermeidung von Energieverlusten.

Weitere Einzelheiten und Insbesondere die Funktionen lassen sich dem folgenden Beschreibungsteil besser entnehmen, in dem anhand der Zeichnung eine erfindungsgemäße Anordnung näher erläutert wird. Sie zeigt in prinzipienhafter Querschnittsdarstellung einen Tragflügel mit erfindungsgemäßer Klappe sowie die umgebende Luftströmung im Flugzustand.

Der Tragflügel 1 ist in einem in Flugrichtung verlaufenden vertikalen Schnitt wiedergegeben und in seiner Form von üblichem Aufbau. An seiner Oberseite 2 und zwar im Bereich der Hinterkante 3 ist eine Klappe 4, ebenfalls in Querschnittsdarstellung, nach oben zu verschwenkbar angebracht. Sie ist in geschlossenem Zustand in den Tragflügel 1 so eingelassen, daß sie außenseitig mit der Oberseite 2 fluchtet, so daß dann keine wesentliche Änderung des Flugzustandes eintritt. In spezieller Ausgestaltung steht die Klappe 4 hierbei über die Hinterkante 3 etwas über, so daß sie durch die die Hinterkante nach oben, entsprechend Pfeil 5 umströmende Luft ein Drehmoment in Öffnungsrichtung - das ist die in gestrichelter Stellung wiedergegebene Position der Klappe 4 - erfährt.

Grundsätzlich ist die Art und Weise der Betätigung von Klappe 4 im Rahmen der Erfindung unerheblich. Insbesondere bedeutet es eine Einschränkung der Allgemeinheit, wenn, wie im gezeigten Fall, die Klappe 4 über die Hinterkante 3 übersteht, hierdurch eine Anströmfläche anbietet, die in Richtung auf eine Öffnung der Klappe 4 hinwirkt. Bei einer bevorzugten Ausgestaltung geschieht die Öffnung entgegen einer Kraft, die so einzustellen ist, daß mit Erreichen des kritischen Anstellwinkels, in dem infolge einer Strömung bestimmter Größe in Richtung des Pfeiles 5 vorliegt, die Öffnung der Klappe 4 eingeleitet und die Ablösung der Strömung an der Oberseite und das Abreißen verhindert oder doch hinausgezögert wird.
Ziel der Erfindung ist die durch Pfeil 5 an der Hinterkante herrschende und auf die Oberseite 2 des Tragflügels 1 gerichtete und auf ein Abreißen zielende Strömung abzuhalten und umzulenken.

Die weiteren Strömungslinien 6 geben den Verlauf der umgebenden Luftströmung im Flugzustand wieder, wobei in ansich bekannter Weise ein Teil der Luft entlang der Oberseite 2 geführt wird, aufgrund des weiter zurückzulegenden Weges basierend auf der Kontinuitätsbedingung eine Beschleunigung erfährt und hierdurch auf der Oberseite 2 einen Unterdruck gegenüber der Unterseite des Tragflügels bildet und diese Differenz in einen Auftrieb resultiert.

Im Ergebnis läßt sich durch die Erfindung ein größerer maximaler Auftrieb, günstigeres Abreißverhalten und mehr Sicherheit im Flugverkehr erreichen.

## Patentansprüche

1. Tragflügel für Flugzeuge mit einer Klappe zur Verringerung der Hinterkantablösung, die an der Oberseite des Tragflügels an dessen hinterem Teil schwenkbar befestigt ist, die im anliegenden Zustand, etwa im Bereich der Hinterkante endet, beim Öffnen von der Hinterkante her öffnet, deren Schwenkachse etwa quer zur Strömungsrichtung verläuft und deren Öffnungswinkel maximal 90° beträgt, **dadurch gekennzeichnet**, daß sich die Klappe (4) gegen eine Kraft, z.B. eine Feder bewegt, die so eingestellt ist, daß sich mit oder kurz vor Erreichen des kritischen maximalen Anstellwinkels des Tragflügels ohne Klappe die Klappe (4) öffnet.

2. Tragflügel nach Anspruch 1, **dadurch gekennzeichnet**, daß der maximale Öffnungswinkel der Klappe (4) gleich dem kritischen Anstellwinkel des Tragflügels ohne Klappe ist.

3. Tragflügel nach Anspruch 1, **dadurch gekennzeichnet**, daß zur Abbremsung einer Trudelbewegung die Öffnung der Klappe (4) über den kritischen Anstellwinkel des Tragflügels ohne Klappe hinaus erfolgt.

4. Tragflügel nach einem der Ansprüche 1 bis 3, **dadurch gekennzeichnet**, daß die Klappe im geschlossenen Zustand mit der Oberseite (2) des Tragflügels (1) fluchtet.

5. Tragflügel nach einem der Ansprüche 1 bis 4, **dadurch gekennzeichnet**, daß die Klappe (4) über die Hinterkante (3) übersteht.

6. Tragflügel nach einem der Ansprüche 1 bis 5, **dadurch gekennzeichnet**, daß die Schwenkachse der Klappe (4) zwischen Hinterkante (3) und maximaler Profildicke des Tragflügels (1) verläuft.

7. Tragflügel nach einem der Ansprüche 1 bis 6, **gekennzeichnet durch** einen gerundeten Übergang zwischen Klappe (4) und Tragflügel (1).

8. Tragflügel nach einem der Ansprüche 1 bis 7, **dadurch gekennzeichnet**, daß die Schwenkbewegung gesteuert ist.

9. Tragflügel nach einem der Ansprüche 1 bis 8, **dadurch gekennzeichnet**, daß die Schwenkbewegung durch elastische Deformation der ganzen Klappe (4) erfolgt.

10. Tragflügel nach einem der Ansprüche 1 bis 9, **gekennzeichnet durch** eine Klappe (4) aus GFK (glasfaserverstärkter Kunststoff) oder faserverstärktem Kunststoff.

11. Tragflügel nach einem der Ansprüche 1 bis 10, **gekennzeichnet durch** mehrere entlang der Hinterkante (3) im Abstand angebrachte Klappen (4).

12. Tragflügel nach einem der Ansprüche 1 bis 11, **gekennzeichnet durch** mehrere senkrecht zur Hinterkante (3) angeordnete, einander evtl. überlappende Klappen (4).

13. Tragflügel nach einem der Ansprüche 1 bis 12, **dadurch gekennzeichnet**, daß der Rand der Klappe (4) im Bereich der Hinterkante (3) rund oder spitz oder sägezahn- oder wellenartig geformt ist.

## Claims

1. Aerofoil for aircraft, having a flap to reduce trailing edge separation, which is fastened onto the rear of the top surface of the aerofoil and can be swivelled, which in a lying condition more or less ends in the region of the trailing edge, when opening opens from the trailing edge, the swivel axis of which extends more or less at right angles to the direction of flow and whose aperture angle is a maximum of 90°, **wherein** said flap (4) moves against a force, e.g. a spring, which is adjusted in such a way that upon, or shortly before, reaching the critical maximum angle of incidence of the aerofoil without flap, said flap (4) opens.

2. Aerofoil according to claim 1, **wherein** said maximum aperture angle of said flap (4) is the same as the critical angle of incidence of the aerofoil without flap.

3. Aerofoil according to claim 1, **wherein** in order to brake a spin movement, opening of said flap (4) is effected beyond the the critical angle of incidence of the aerofoil without flap.

4. Aerofoil according to one of claims 1 to 3, **wherein** in the in the closed condition the flap is flush with said top surface (2) of said aerofoil (1).

5. Aerofoil according to one of claims 1 to 4, **wherein** said flap (4) juts beyond said trailing edge (3).

6. Aerofoil according to one of claims 1 to 5, **wherein** said swivel axis of said flap (4) extends between trailing edge (3) and the maximum profile thickness of said aerofoil (1).

7. Aerofoil according to one of claims 1 to 6, **wherein** there is a rounded transition between flap (4) and aerofoil (1).

8. Aerofoil according to one of claims 1 to 7, **wherein** the swivel movement is controlled.

9. Aerofoil according to one of claims 1 to 8, **wherein** the swivel movement is effected through elastic deformation of the entire flap (4).

10. Aerofoil according to one of claims 1 to 9, **wherein** said flap (4) is made of FRP (fibrous-glass reinforced plastics) or fibrous-reinforced plastics.

11. Aerofoil according to one of claims 1 to 10, **wherein** a plurality of flaps (4) are fastened at a distance to one another along said trailing edge (3).

12. Aerofoil according to one of claims 1 to 11, **wherein** a plurality of flaps (4) are arranged perpendicular to said trailing edge (3), possibly overlapping one another.

13. Aerofoil according to one of claims 1 to 12, **wherein** the edge of said flap (4) has a round or pointed or saw-toothed or wavelike shape in the region of said trailing edge (3).

## Revendications

1. Aile pour avions avec un volet pour réduire le décollement de bord de fuite, qui est fixé de façon pivotante sur la face supérieure de l'aile à son extrémité arrière, qui lorsqu'il est fermé, s'étend environ jusque dans la zone du bord de fuite, lorsqu'il s'ouvre, s'ouvre à partir du bord de fuite, et dont l'axe de rotation est disposé sensiblement transversalement à la direction d'écoulement et dont l'angle d'ouverture est au maximum de 90°, **caractérisée en ce que** le volet (4) se déplace à l'encontre d'une force, un ressort par exemple, qui est règlée de telle sorte qu'au moment, ou juste avant, où l'angle d'incidence maximum critique de l'aile sans volet est atteint, le volet (4) s'ouvre.

2. Aile selon la revendication 1, **caractérisée en ce que** l'angle d'ouverture maximum du volet (4) est égal à l'angle d'incidence critique de l'aile sans volet.

3. Aile selon la revendication 1, **caractérisée en ce que** pour freiner un mouvement de vrille l'ouverture du volet (4) se produit au-delà de l'angle d'incidence critique de l'aile sans volet (4).

4. Aile selon l'une des revendications 1 à 3, **caractérisée en ce que** le volet lorsqu'il est fermé, s'aligne avec la surface supérieure (2) de l'aile (1).

5. Aile selon l'une des revendications 1 à 4, **caractérisée en ce que** le volet (4) dépasse du bord de fuite (3).

6. Aile selon l'une des revendications 1 à 5, **caractérisée en ce que** l'axe de rotation du volet (4) est disposé entre le bord de fuite (3) et l'épaisseur maximale du profil de l'aile (1).

7. Aile selon l'une des revendications 1 à 6, **caractérisée par** une transition arrondie entre le volet (4) et l'aile (1).

8. Aile selon l'une des revendications 1 à 7, **caractérisée en ce que** le mouvement de pivotement est commandé.

9. Aile selon l'une des revendications 1 à 8, **caractérisée en ce que** le mouvement de pivotement se produit sous l'effet d'une déformation élastique de tout le volet.

10. Aile selon l'une des revendications 1 à 9, **caractérisée par** un volet (4) en matière plastique renforcée aux fibres de verre (GFK) ou en matière plastique renforcée par fibres.

11. Aile selon l'une des revendications 1 à 10, **caractérisée par** plusieurs volets (4) disposés à intervalle le long du bord de fuite (3).

12. Aile selon l'une des revendications 1 à 11, **caractérisée par** plusieurs volets (4) disposés perpendiculairement au bord de fuite (3) et se recouvrant éventuellement mutuellement.

13. Aile selon l'une des revendications 1 à 12, **caractérisée en ce que** le bord du volet (4) a dans la zone du bord de fuite (3) une forme arrondie, ou pointue ou en dents de scie ou ondulée.
